# EUROPEAN PATENT APPLICATION

(11) **EP 2 039 500 A1**
(43) Date of publication of application: **25.03.2009**
(21) Application number: 08164606.9
(22) Date of filing: 18.09.2008
(51) Int. Cl.: B29D 30/00, B60C 1/00, B29C 73/22

(54) **Pneumatic tire having built-in sealant layer and preparation thereof**

(30) Priority: 21.09.2007 US 858990
(71) Applicant: The Goodyear Tire & Rubber Company, Akron, OH 44316-0001 (US)
(72) Inventor: Majumdar, Ramendra Nath, Hudson, OH 44236 (US); Puhala, Aaron Scott, Kent, OH 44240 (US)
(74) Representative: Kutsch, Bernd

(57) **Abstract**

The present invention is directed to a pneumatic tire (10) having a built-in sealant layer (23) and its preparation. In one embodiment, the pneumatic tire includes an outer circumferential rubber tread (14) and a supporting carcass (16). A rubber inner liner (20) is disposed inwardly from the supporting carcass. A built-in sealant layer (23) is situated adjacent an innermost gas permeable layer (24) and disposed inwardly from the rubber inner liner (20). The built-in sealant layer provides self-sealing properties to the pneumatic tire. The tire, with its innermost gas permeable layer, allows for elimination or reduction in blister formation in the tire.

## Description

### Field of the Invention

The present invention is directed to a pneumatic tire having a built-in sealant layer and its preparation.

### Background of the Invention

Various methods, sealants and tire constructions have been suggested for pneumatic tires that relate to use of liquid sealant coatings in which the sealant flows into the puncture hole. However, such liquid sealants can flow excessively at elevated temperatures and cause the tire to become out of balance. Also, the liquid sealant may not be entirely operable or effective over a wide temperature range extending from summer to winter conditions. More complicated tire structures which encase a liquid sealant in a vulcanized rubber material can be expensive to manufacture and can also create balance and suspension problems due to the additional weight required in the tire.

Puncture sealing tires also have been further proposed wherein a sealant layer of degradable rubber, for example, is assembled between unvulcanized tire layers to provide a built-in sealant. The method of construction, however, is generally only reasonably possible when, for example, the sealant layer is laminated with another non-degraded layer of rubber, e.g., a tire inner liner, which permits handling during the tire building procedure. This is because the degradable rubber tends to be tacky or sticky in nature and lacks strength making it very difficult to handle alone without additional support. The inner liner also keeps the sealant layer from sticking to a tire-building apparatus. By finally laminating the sealant layer between two or more non-degraded rubber layers, e.g., the tire inner liner and a tire carcass, the sealant layer retains structural integrity during the vulcanization operation wherein high pressures are applied to the tire, which would otherwise displace the degraded rubber layer from its desired location. Accordingly, the resulting puncture sealing tire typically has a sealant layer between the inner liner and tire carcass.

Such a lamination procedure significantly increases the cost of manufacturing a tire. In addition, the compounds in the built-in sealant, e.g., organic peroxide depolymerized butyl based rubber, may generate gases at higher temperature, such as during the cure or during the tire use, which can result in aesthetically unappealing inner liner blister formation. Aside from being unappealing, such blister formation may allow the sealant to unfavorably migrate away from its intended location.

Accordingly, there is a need for a simple and practical method of preparing a self-sealing tire that eliminates or reduces blister formation in the tire inner liner.

### Summary of the Invention

The present invention is directed to a pneumatic tire having a built-in sealant layer according to claim 9 and a method of manufacturing such a tire according to claim 1.

Dependent claims refer to preferred embodiments of the invention.

In one embodiment, a pneumatic tire includes an outer circumferential rubber tread and a supporting carcass. A rubber inner liner is disposed inwardly from the supporting carcass. A built-in sealant layer is situated adjacent to an innermost gas permeable layer and disposed inwardly from the rubber inner liner. The sealant layer provides self-sealing properties to the pneumatic tire. The tire, with its innermost gas permeable layer, allows for elimination or reduction in blister formation in the tire.

The pneumatic tire, in one embodiment, can be prepared by positioning a gas permeable layer on a tire-building apparatus. Next, a precursor sealant layer is positioned directly on the gas permeable layer. A rubber inner liner is disposed outwardly of the precursor sealant layer followed by a tire carcass then a rubber tire tread on the tire carcass to form an unvulcanized tire assembly. Then, the unvulcanized tire assembly is vulcanized under conditions of heat and pressure such that the precursor sealant layer provides the pneumatic tire with self-sealing properties.

In another embodiment, a method of preparing a pneumatic tire includes positioning a non-woven sheet of polyester, nylon, or aramid on a tire-building apparatus. Next, a precursor sealant layer is positioned directly on the non-woven sheet. The precursor sealant layer may include an uncured butyl rubber-based rubber composition or a polyurethane based composition. A rubber inner liner is positioned directly on the precursor sealant layer followed by a tire carcass then a rubber tire tread on the tire carcass to define an unvulcanized tire assembly. The precursor sealant layer provides the pneumatic tire with self-sealing properties after vulcanization.

By virtue of the foregoing, there is provided a pneumatic tire that has an ability to seal against various puncturing objects and can eliminate or reduce inner liner blister formation in the tire, for example.

### Brief Description of the Drawings

The accompanying drawings, which are incorporated in and constitute a part of this specification, illustrate embodiments of the invention and, together with the general description of the invention given above, and detailed description given below, serve to explain the invention.

Fig. 1 is a cross-sectional view of a pneumatic tire in accordance with one embodiment of the present invention; and

Fig. 2 is a cross-sectional view partially broken away of an unvulcanized tire assembly prepared in accordance with one embodiment of the present invention.

### Detailed Description

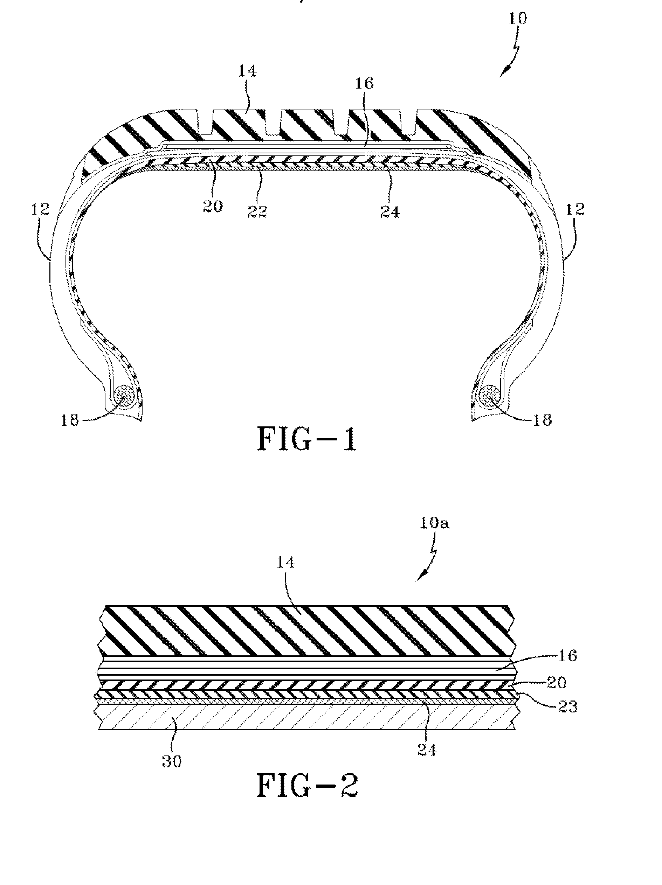

Fig. 1 shows a pneumatic tire 10 that has an ability to seal against various puncturing objects and has the ability to eliminate or reduce blister formation in the tire 10, particularly inner liner blister formation. The tire 10 includes sidewalls 12, an outer circumferential rubber tread (or tread portion) 14, a supporting carcass 16, inextensible beads 18, a rubber inner liner (or air barrier layer) 20, a built-in sealant layer 22, and an innermost gas permeable layer 24. The individual sidewalls 12 extend radially inward from the axial outer edges of the tread portion 14 to join the respective inextensible beads 18. The supporting carcass 16 acts as a supporting structure for the tread portion 14 and sidewalls 12. The rubber inner liner 20 is disposed inwardly from the supporting carcass 16. The sealant layer 22 is adjacent the innermost gas permeable layer 24 and disposed inwardly from the rubber inner liner 20. The outer circumferential tread 14 is adapted to be ground contacting when the tire 10 is in use.

The innermost gas permeable layer 24 of the tire 10 defines a non-woven sheet of polymeric material. In one example, the gas permeable layer 24 includes a non-woven sheet of polyester, nylon, or aramid. The non-woven sheet may be prepared by a melt blown process, spun bond, or point bonding process, as is known in the art. Such polyester and nylon non-woven sheets, for example, are available from 3M of St. Paul, Minnesota or Nolar Industries Limited of Ontario, Canada. The gas permeable layer 24 permits gas from the built-in sealant layer 22 to escape or become part of the tire's inflation air, such as when the tire 10 is at its running temperature.

The built-in sealant layer 22, prior to vulcanization of the pneumatic tire 10, is referred to herein as a precursor sealant layer 23. The precursor sealant layer 23 can generally include any non-flowing sealant material known in the art.

In one embodiment, the precursor sealant layer 23 can include a self-healing polyurethane composition. In one example, such polyurethane composition may define a non-flowing, or non-liquid, polyurethane composition that is neither gel-like nor substantially tacky and that provides a self-supporting precursor sealant layer 23. Concerning self-supporting, the polyurethane composition of the precursor sealant layer 23 maintains its own form, e.g., as a sheet or layer, without the need to be laminated to one or more supporting structures. The polyurethane composition is substantially non-tacky in that a sheet of the polyurethane composition, for example, may contact another sheet yet be pulled apart with relative ease and still substantially maintain its original form. The non-flowing polyurethane composition can include a self-healing polyurethane elastomeric material, which may contain, for example, methylene diphenyl 4,4'-diisocyanate (MDI) and poly(alkylene oxide) glycol. In another example, the self-healing polyurethane composition is gel-like and tacky. One such suitable polyurethane composition is Tyrlyner^{®} available from VITA Industrial Inc. of Thomasville, Georgia. It should be understood that formulations of urethane materials that can be used for the self-healing polyurethane composition may be readily produced by persons having ordinary skill in the art from known chemistry techniques in the production of urethanes.

After vulcanization, the polyurethane composition provides a gel-like and tacky polyurethane composition, such as by way of thermal degradation, which provides the pneumatic tire 10 with self-sealing properties and defines the built-in sealant layer 22.

In another example, the sealant layer 22, before vulcanization, can include an uncured butyl rubber-based rubber composition. One such suitable uncured butyl rubber-based rubber composition is disclosed in US-B- 6,962,181.

In one embodiment, the uncured butyl rubber-based rubber composition may include a peroxide and a dispersion therein of a particulate precured rubber selected from pre resin-cured butyl rubber. In one example, based upon parts by weight per 100 parts by weight of said butyl rubber, the butyl rubber-based rubber composition can include a copolymer of isobutylene and isoprene, wherein the copolymer contains from 0.5 units to 5 units derived from isoprene, and correspondingly from about 95 weight percent to 99.5 weight percent units derived from isobutylene. The butyl rubber that can be employed may typically have a number average molecular weight, for example, in the range of 200,000 to 500,000.

The uncured butyl rubber composition further includes a sufficient amount of organoperoxide to cause the butyl rubber to partially depolymerize, usually in a range of from 0.5 to 10 phr of the active organoperoxide depending somewhat upon the time and temperature of the tire curing operation and the degree of depolymerization desired.

Various organoperoxides may be used such as those that become active (e.g. generate peroxide free radicals) at high temperatures, that is, above 100°C. Such organoperoxides are referred to herein as active peroxides. Examples of such organoperoxides are, for example, tertbutyl perbenzoate and dialkyl peroxides with the same or different radicals, such as dialkylbenzene peroxides and alkyl pre-esters. In one example, the active organoperoxide will contain two peroxide groups. In another example, the peroxide groups are attached to a tertiary butyl group. The basic moiety on which the two peroxide groups are suspended can be aliphatic, cycloaliphatic, or aromatic radicals. Some representative examples of such active organoperoxides are, for example, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy)hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy)hexane. Other suitable organoperoxides may be found in P.R. Dluzneski, "Peroxide vulcanization of elastomers", Rubber Chemistry and Technology, Vol. 74, 451 (2001).

The peroxide can be added to the uncured butyl rubber composition in pure form (100 percent active peroxide) or on an inert, free-flowing mineral carrier such as calcium carbonate. Silicon oil is an inert mineral carrier often utilized for this purpose. Such carrier composition containing from 35 weight percent to 60 weight percent active ingredient (peroxide) can be employed. For example, 40 percent by weight dicumylperoxide on an inert carrier can be employed as the peroxide vulcanizing agent in the butyl rubber composition layer.

The uncured butyl rubber-based rubber composition may further include particulate filler including 5 phr to 90 phr of at least one of rubber reinforcing carbon black and coal dust, or mixtures thereof, and, optionally from zero phr to 6 phr, alternatively 1 phr to 4 phr, of short fibers, and/or from zero phr to 20 phr, alternatively from 2 phr to 15 phr, of hollow glass microspheres. It is also to be understood that other known fillers and/or reinforcing agents, such as silica and calcium carbonate, can be substituted for part of the carbon black in this composition.

For the carbon black, various particulate rubber reinforcing carbon blacks are, for example, carbon black referenced in The Vanderbilt Rubber Handbook, 1978, Pages 408 through 417, which are characterized by iodine adsorption (ASTM D1510) and dibutylphthalate absorption (ASTM D 2414) values which are prepared by deposition from a vapor phase at very high temperatures as a result of thermal decomposition of hydrocarbons, rather than a carbonization of organic substances. Such carbon black may have an Iodine adsorption value ranging from 20 mg/g to 270 mg/g and a dibutylphthalate absorption value ranging from 60 cc/100 gms to 180 cc/100 gms. Such carbon black is composed of aggregates of elemental carbon particles of colloidal dimensions, which have a high surface area.

Coal dust, or coal fines, is carbonaceous dust from naturally occurring coal. Coal dust is of significantly greater size than rubber reinforcing carbon black, is not rubber reinforcing in the sense of rubber reinforcing carbon black, and represents a significantly lower cost filler than rubber reinforcing carbon black. The coal dust can be used in greater quantities (concentration) in the butyl rubber composition without significantly adversely affecting the processing of the composition, yet being beneficial to aid in the efficiency of the puncture sealing ability of the resultant built-in sealant layer 22. Further, the coal dust is considered herein useful in promoting adjustment of the storage modulus (G') property of the sealant.

The short fibers may be selected from, for example, cotton fibers and from synthetic fibers selected from rayon, aramid, nylon and polyester fibers, or mixtures thereof. Such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to promote adjustment of a G' property of the sealant composition as well as, in relatively low concentrations, not significantly interfering with the processing of the sealant precursor composition and enhancing the efficiency of the resultant built-in sealant layer 22 and its puncture sealing ability.

Representative of the hollow glass microspheres are, for example, Scotchlite Glass Bubbles^{™} (S60/10000 series), having an average spherical diameter of 30 microns, from the 3M Company. The hollow glass microspheres are considered herein to promote adjustment of a G' property of the sealant composition as well as enhancing the puncture sealing efficiency and capability of the built-in sealant and, in relatively low concentrations, not significantly adversely affecting the processing of the sealant precursor composition.

The uncured butyl rubber-based rubber composition composition may further include from zero phr to 20 phr of rubber processing oil, such as one having a maximum aromatic content of 15 weight percent with a naphthenic content in a range of from 35 weight percen to 45 weight percent and a paraffinic content in a range of 45 weight percent to 55 weight percent.

The various rubber processing oils are known to those having skill in such art. In one example, the rubber processing oil has a low aromaticity content, such as less than 15 weight percent. Such a rubber processing oil may be composed of, for example, 35 weight percent to 45 weight percent naphthenic content, 45 weight percent to 55 weight percent paraffinic content, and an aromatic content of less than 15 weight percent (e.g. from 10 to 14 weight percent). It is considered herein that a representative of such rubber processing oil is Flexon 641^{™} from the ExxonMobil company.

The uncured butyl rubber-based rubber composition may further include from zero phr to 10 phr, alternatively 1 to 8 phr, of liquid conjugated diene-based polymer having a weight average molecular weight of less than 80,000 provided however, where the particulate filler is exclusively rubber reinforcing carbon black, the partially composition contains at least 1 phr of liquid diene-based polymer.

The liquid conjugated diene-based liquid polymer may be, for example, a liquid cis 1,4-polyisoprene polymer and/or liquid cis 1,4-polybutadiene polymer. It is to be appreciated that such liquid polymers for the butyl rubber precursor composition are therefore polymers that contain olefinic unsaturation and therefore are not intended to include polyisobutylene that does not contain olefinic unsaturation. A commercial liquid cis 1,4-polyisoprene polymer may be, for example, LIR 50^{™} from the Kuraray Company of Osaki, Japan. A liquid cis 1,4-polybutadiene polymer (absorbed on a particulate filler) may be, for example, Karasol PS-01^{™} from the Drobny Polymer Association.

It is considered herein that the liquid polyisoprene polymer in the butyl rubber acts to aid in regulating the storage modulus G' of the partially depolymerized butyl rubber. For example, addition of the liquid polyisoprene polymer has been observed to provide the partially depolymerized butyl rubber composition with a somewhat increased loss modulus G' which may be desirable for some applications.

In one example, the uncured butyl based composition can include 100 parts of a butyl rubber copolymer, 10 to 40 parts of carbon black, 5 to 35 parts of polyisobutylene, 5 to 35 parts of an oil extender, 0 to 1 part of sulfur, and from about 1 to 8 parts of a peroxide vulcanizing agent.

The polyurethane compositions for use in the resulting sealant layer 22 (and precursor sealant layer 23) may further include one or more of the additional components as discussed above, such as reinforcing filler, e.g., carbon black, silica, coal dust, fibers, or microspheres, processing oil, and other diene-based liquid polymers, for example, such as in conventional amounts. It should be understood by one having ordinary skill in the art that additional components may be included in the sealant layer 22 as desired, such as antidegradants, accelerators, etc., in conventional amounts.

The resulting built-in sealant layer 22 (and precursor sealant layer 23) may further include a colorant to provide a non-black colored built-in sealant layer having the capability of visibly identifying a puncture wound. That puncture wound may extend through a black colored rubber inner liner layer, black colored rubber tire tread, and/or black colored sidewall layer to the built-in sealant layer by a physical flow of a portion of the non-black colored built-in sealant layer through the puncture wound to form a contrastingly non-black colored sealant on a visible surface of the black colored inner liner, tread, or sidewall.

The colorant may include titanium dioxide. For example, the colorant of the sealant layer 22 may be titanium dioxide where a white colored sealant layer is desired. Also, such colorant may include titanium dioxide as a color brightener together with at least one non-black organic pigment and/or non-black inorganic pigment or dye. Various colorants may be used to provide a non-black color to the sealant layer 22. Representative of such colorants are, for example, yellow colored colorants as Diarylide Yellow^{™} pigment from PolyOne Corporation and Akrosperse E-6837^{™} yellow EPMB pigment masterbatch with an EPR (ethylene/propylene rubber) from the Akrochem Company.

The various components of the precursor sealant layer 23, prior to building the tire 10, can be mixed together using conventional rubber mixing equipment, particularly an internal rubber mixer. The butyl rubber and polyurethane composition used in the precursor sealant layer 23 generally has sufficient viscosity and enough unvulcanized tack to enable its incorporation into an unvulcanized tire without substantially departing from standard tire building techniques and without the use of complicated, expensive tire building equipment.

Material permitting, the precursor sealant layer 23, prior to building of the tire 10, may be formed into sheet stock that can be cut into strips and then positioned on a tire building apparatus 30, such as a tire drum, during the tire build-up process. The tire building process is described in detail further below.

The rubber tire inner liner 20 may be any known rubber inner liner for use in pneumatic tires 10. In one example, the rubber inner liner 20 can be a sulfur curative-containing halobutyl rubber composition of a halobutyl rubber such as for example chlorobutyl rubber or bromobutyl rubber. Such tire halobutyl rubber based inner liner layer may also contain one or more sulfur curable diene-based elastomers such as, for example, cis 1,4-polyisoprene natural rubber, cis 1,4-polybutadiene rubber and styrene/butadiene rubber, or mixtures thereof. The inner liner 20 is normally prepared by conventional calendering or milling techniques to form a strip of uncured compounded rubber of appropriate width, which is sometimes referred to as a gum strip. When the tire 10 is cured, the inner liner 20 becomes an integral, co-cured, part of the tire 10.

The tire carcass 16 generally may be any conventional tire carcass for use in pneumatic tires 10. Generally, the tire carcass 16 includes one or more layers of plies and/or cords to act as a supporting structure for the tread portion 14 and sidewalls 12. The remainder of the tire components, e.g., tire tread 14, sidewalls 12, and reinforcing beads 18, also generally may be selected from those conventionally known in the art.

The pneumatic tire of Fig. 1 may be prepared, as best shown in Fig. 2, by building sealant layer 22 into an uncured tire 10a using tire drum 30 and conventional tire building techniques. More specifically, the innermost gas permeable layer 24, which may include a non-woven sheet of polymeric material, is first situated or positioned on the tire drum 30, such as by being wrapped therearound, with the remainder of the uncured tire 10a being subsequently built thereon.

With continuing reference to Fig. 2, precursor sealant layer 23 is positioned directly on the gas permeable layer 24. For example, the butyl rubber based rubber or polyurethane based composition may be formed into a strip or layer of unvulcanized rubber, by using conventional equipment such as a calender, extruder, or any combination thereof. The thickness of the strip can vary in the unvulcanized tire. Generally, the thickness may range from about 0.13 cm (0.05 inches) to about 1.9 cm (0.75 inches), alternatively 0.25 cm to 0.85 cm. In passenger tires, the precursor sealant layer 23 may have a thickness of about 0.32 cm (0.125 inches) whereas for truck tires, the precursor sealant layer 23 may have a thickness of about 0.76 cm (0.3 inches). The built-in sealant layer 22 is generally situated in the crown region of the tire 10, and may include colorant so that it is of a non-black color that may contrast with the black colored inner liner, tread, or sidewall so that a tire puncture can be noticed.

The rubber inner liner 20 is then positioned on the precursor sealant layer 23, which is followed by the tire carcass 16. Finally, the rubber tire tread 14 is positioned on the tire carcass 16 thereby defining unvulcanized tire assembly 10a.

After the unvulcanized pneumatic tire 10a is assembled, the tire 10a is shaped and cured using a normal tire cure cycle. After curing, the composition of the precursor sealant layer 23 is gel-like and tacky which provides the pneumatic tire 10 with self-sealing properties and defines the built-in sealant layer 22.

Generally, the tire 10a can be cured over a wide temperature range. For example, passenger tires might be cured at a temperature ranging from 130°C to 170°C and truck tires might be cured at a temperature ranging from 150°C to 180°C. In one example, the tire assembly 10a is cured in a suitable mold at a temperature in a range of from 150°C to 175°C for a sufficient period of time such as to partially depolymerize the butyl rubber or thermally degrade non-flowing polyurethane that is neither gel-like nor substantially tacky, for example, thereby forming the built-in sealant layer 22 which has puncture sealing properties. After curing, the gas permeable layer 24 is securely attached to the built-in sealant 22.

Examples of test pieces of the pneumatic tire 10 with built-in sealant 22 in accordance with the detailed description are now disclosed below.

Three pneumatic tire test pieces were prepared for testing. Each test piece is described below.

### Test Piece No. 1

The following layers were assembled one on top of the other:
7"x7" calendared tread of thickness 0.1 "
4"x4" calendared wire of thickness 0.068"
7"x7" belt (aligned with the wire) of thickness 0.026"
7"x7" liner compound of thickness 0.03"
4"x4" butyl based precursor sealant layer of thickness 0.25"
7"x7" non-woven polyester sheet

The above laminated test piece was cured for 35 minutes at 150°C and 200 psi.

### Test Piece No. 2

The following layers were assembled one on top of the other:
7"x7" calendared tread of thickness 0.1 "
4"x4" calendared wire of thickness 0.068"
7"x7" belt (aligned with the wire) of thickness 0.026"
7"x7" liner compound of thickness 0.03"
4"x4" butyl based precursor sealant layer of thickness 0.25"
7"x7" non-woven nylon sheet

The above laminated test piece was cured for 35 minutes at 150°C and 200 psi.

### Test Piece No. 3

The following layers were assembled one on top of the other:
7"x7" calendared tread of thickness 0.1 "
4"x4" calendared wire of thickness 0.068"
7"x7" belt (aligned with the wire) of thickness 0.026"
7"x7" liner compound of thickness 0.03"
4"x4" polyurethane based precursor sealant layer of thickness 0.18"
7"x7" non-woven polyester sheet

The above laminated test piece was cured for 35 minutes at 150°C and 200 psi.

### Control test piece

The following layers were assembled one on top of the other:
7"x7" calendared tread of thickness 0.1 "
4"x4" calendared wire of thickness 0.068"
7"x7" belt (aligned with the wire) of thickness 0.026"
4"x4" butyl based precursor sealant layer of thickness 0.25"
7"x7" inner liner compound of thickness 0.03"

The above laminated test piece was cured for 35 minutes at 150°C and 200 psi.

Concerning test piece nos. 1 and 2, the non-woven polyester and nylon sheets were obtained from 3M of St. Paul. MN. Each sheet was prepared by a melt blown process. The butyl based composition used for the precursor sealant layer in test piece nos. 1 and 2, and in the control is set forth below in Table I. The composition was prepared in a two-step process with the butyl rubber and the specified ingredients being mixed in a first non-productive step. In a second step, peroxide was mixed into the butyl rubber mixture. Concerning test piece no. 3, the non-woven polyester sheet was obtained from Nolar Industries Limited of Ontario, Canada, and the polyurethane based precursor sealant layer was Tyrlyner^{®}, a gel-like and tacky polyurethane composition, obtained from Hyperlast North America of Chattanooga, TN.

**TABLE I: Composition of Butyl Based Sealant**

| Component | Stage | Amount (phr) |
|---|---|---|
| Butyl rubber | Non-productive 1 (NP1) | 100.00 |
| Medium processing oil | NP1 | 3.00 |
| Silica | NP1 | 20.00 |
| Clay | NP1 | 10.00 |
| Titanium dioxide | NP1 | 2.0 |
| Dusting agent | NP1 | 0.5 |
| Yellow pigment¹ | NP1 | 1.00 |
| | | |
| NP1 | Productive | 136.5 |
| Peroxide² (40%) | Productive | 12.00 |
| Total | | 148.50 |

| | | |
|---|---|---|
| ¹ Yellow pigment, Akrochem E-6837 ² Link-Cup® NBV40C available from GEO Specialty Chemicals of Gibbstown, NJ; chemical name: n-butyl-4,4-di(tert-butylperoxy)valerate, 40% supported on calcium carbonate | | |

The cured test pieces were tested to evaluate puncture sealing effectiveness. In the testing process, each test piece was secured lengthwise across an open chamber of a box, which defined a benchtop nail hole tester, to generally seal the opening to the chamber. Test piece nos. 1, 2, and 3 were situated so that the innermost gas permeable layer faced the open chamber and the tire tread faced outwardly. The control was situated so that the inner liner faced the open chamber and the tire tread faced outwardly. In the chamber, air pressure could be established via an inlet valve, maintained, and monitored to simulate a pressurized pneumatic tire. A nail was used to manually puncture the test piece. Each test piece was subjected to puncturing by nails of varying and increasing diameter to evaluate air pressure loss after nail insertion, removal, and reinflation (if needed). Air pressure readings at each step were taken after a two-minute period. The results of the puncture sealing testing are set out in Table II below.

**Table II: Test Results**

| | 1 | 2 | 3 | Control |
|---|---|---|---|---|
| Initial psi = 35 After 0.136" diameter nail insertion | 35 | 35 | 35 | 35 |
| After nail removal | 31 | 31 | 35 | 31 |
| Re-inflation to 35 psi | 35 | 35 | Not Needed | 35 |
| Initial psi = 35 After 0.176" diameter nail insertion | 35 | 35 | 35 | 35 |
| After nail removal | 13 | 13 | 35 | 13 |
| Re-inflation to 35 psi | 35 | 35 | Not Needed | 35 |
| Initial psi = 35 After 0.235" diameter nail insertion | -- | -- | 35 | 35 |
| After nail removal | -- | -- | 35 | 0 |
| Re-inflation to 35 psi | -- | -- | Not Needed | Leak from nail hole |

Based upon the test results, the puncture sealing properties of test pieces nos. 1-3 are at least as good as the control. Specifically, the test results showed that test pieces 1 and 2, and the control could seal nail holes up to 0.176" in diameter by maintaining air pressure after reinflation to the initial starting air pressure. Test piece no. 3, which utilized the polyurethane composition Tyrlyner^{®}, could seal nail holes up to at least 0.235" in diameter by maintaining initial air pressure after nail removal. In other words, reinflation of test piece no. 3 was not required.

Test piece nos. 1, 2, and 3, and the control were also placed in an oven at 150°C for 15 minutes to test for blister formation. Each test piece was then removed from the oven and visually observed. Blister formation was not detected in test piece nos. 1, 2, and 3. However, the control showed heavy blister formation in the innermost inner liner. This suggested that the non-woven materials could bleed therethrough volatile material formed from thermal degradation of the butyl rubber based sealant and polyurethane composition thus preventing blister formation.

Accordingly, there is provided a pneumatic tire 10 that has an ability to seal against various puncturing objects and can eliminate or reduce inner liner blister formation in the tire 10.

## Claims

1. A method of preparing a pneumatic tire comprising:
positioning a gas permeable layer (24) and/or a non-woven sheet of polymeric material on a tire-building apparatus (30);
positioning a precursor sealant layer (23) directly on the gas permeable layer (24) or the non-woven sheet of polymeric material;
forming an unvulcanized tire assembly (14, 16, 20) on the precursor sealant layer; and
vulcanizing the unvulcanized tire assembly under conditions of heat and pressure, the precursor sealant layer (23) providing the pneumatic tire with self-sealing properties.

2. The method of claim 1 wherein the gas permeable layer (24) defines a non-woven sheet of polymeric material.

3. The method of claim 2 wherein the polymeric material includes a polyester, nylon, or aramid.

4. The method of claim 2 or 3 wherein the non-woven sheet of polyester, nylon, or aramid is prepared by a melt blown, spun bond, or point bonding process.

5. The method of at least one of the previous claims wherein the precursor sealant layer (23) comprises an uncured butyl rubber-based rubber composition.

6. The method of at least one of the previous claims wherein the precursor sealant layer (23) comprises a polyurethane based rubber composition.

7. The method of at least one of the previous claims, further comprising positioning a rubber inner liner (20) directly on the precursor sealant layer (23) followed by a tire carcass (16) and a rubber tire tread (14) on the tire carcass to define the unvulcanized tire assembly.

8. A pneumatic tire with a built-in sealant layer, the tire comprising an outer circumferential rubber tread (14), a supporting carcass (16) therefore, a rubber inner liner (20) disposed inwardly from the supporting carcass (16), an innermost gas permeable layer (24) and/or a non-woven sheet of polymeric material, and a sealant layer (23) adjacent the innermost gas permeable layer (24) and disposed inwardly from the rubber inner liner (20), wherein the sealant layer (23) provides self-sealing properties to the pneumatic tire.

9. The tire of claim 8 wherein the gas permeable layer defines a non-woven sheet of polymeric material.

10. The tire of claim 9 wherein the polymeric material includes a polyester, nylon, or aramid.

11. The tire of at least one of the claims 8-10 wherein the non-woven sheet of polyester, nylon, or aramid is prepared by a melt blown, spun bond, or point bonding process.

12. The tire of at least one of the claims 8-11 wherein the sealant layer comprises a butyl rubber-based rubber composition.

13. The tire of at least one of the claims 8-12 wherein the sealant layer comprises a polyurethane based composition.

14. The tire of at least one of the claims 8-13 wherein the inner liner (20) is positioned directly on the sealant layer (23).
